# EUROPEAN PATENT SPECIFICATION

(11) **EP 2 376 665 B1**
(45) Date of publication and mention of the grant of the patent: **25.02.2015**
(21) Application number: 09796641.0
(22) Date of filing: 30.12.2009
(51) Int. Cl.: C22B 23/00, C22B 11/00, C22B 7/00, C22B 3/08, C22B 3/46, C22B 15/00

(54) **RECOVERY OF COBALT AND PGM METALS FROM COBALT ALLOYS CONTAINING PRECIOUS METALS BY SELECTIVE DISSOLUTION**
WIEDERGEWINNUNG VON KOBALT UND EDELMETALLEN AUS EDELMETALLHALTIGEN KOBALTLEGIERUNGEN DURCH SELEKTIVE AUFLÖSUNG
RÉCUPÉRATION DU COBALT ET DES MÉTAUX PRÉCIEUX À PARTIR D'ALLIAGES DE COBALT CONTENANT DES MÉTAUX PRÉCIEUX PAR DISSOLUTION SÉLECTIVE

(30) Priority: 31.12.2008 EP 08022548; 15.01.2009 US 193981 P
(43) Date of publication of application: 19.10.2011
(73) Proprietor: Umicore, 1000 Brussels (BE)
(72) Inventor: OOSTERHOF, Harald, B-2260 Westerlo (BE); VLEUGELS, Eddy, B-2250 Olen (BE)
(74) Representative: Pilate, André
(86) International application number: PCT/EP2009/009328
(87) International publication number: WO 2010/076030

(56) References cited:
- WO-A-00/73520
- CA-A1- 2 235 429
- US-A- 3 954 448
- US-A- 4 468 302
- US-B1- 6 440 194
- DATABASE WPI Week 200537 Thomson Scientific, London, GB; AN 2005-363658 XP002530565 & RU 2 252 270 C1 (NORILSK NICKEL MINING METAL STOCK CO) 20 May 2005 (2005-05-20)

## Description

This disclosure concerns the recovery of metals from recycled products such as spent GTL catalysts. It concerns in particular a hydrometallurgical process that usefully can be carried out on the cobalt-based, PGM-bearing alloys that are typically obtained after smelting said catalysts.

Because of decreasing crude oil stocks, more and more diesel oil is produced using gas-to-liquid technology (GTL). Natural gas is hereby converted to syngas and then to high-quality liquid hydrocarbons that are virtually free of sulfur and aromatics.

The heart of the GTL process is the Fischer-Tropsch reaction, in which the syngas is converted into diesel. This reaction is performed in the presence of a catalyst. Most GTL catalysts consist of an alumina, silica or titanium dioxide substrate having a high specific surface area. Cobalt and traces of either PGM (platinum group metals, i.e. Pt, Os, Ir, Ru, Rh, Pd) or of Re form active catalytic sites at the surface of the carrier.

However, after time, due to contamination by toxins, catalysts loose their activity and have to be replaced. There are ecological and economical reasons why recycling of such spent catalysts is preferred to land-filling.

Typical GTL catalysts contain approximately 20% (by weight) of cobalt and 500 ppm of PGM. In view of the current and expected market value of these metals, it appears desirable to recover them with high yields. The carrier itself is less attractive from an economical point of view. It also has a negligible environmental fingerprint.

In view of the above, a preliminary separation of the desired metals from the carrier material is operated. This can be performed by smelting the catalyst according to known processes, yielding a metallic alloy comprising the cobalt and the PGM, and a slag phase comprising the carrier material. The object of this disclosure concerns the further processing of the cobalt-based alloy, i.e. alloys containing more than 50% Co by weight.

They also contain significant amounts of precious metals, along with some residuals from the slag phase.

In a typical hydrometallurgical process, such a metallic alloy is leached in acidic conditions. This normally leads to the formation of H₂. Extreme caution is then necessary, as the contained PGM are well known to catalyze the reaction of H₂ with any oxidizing agent such as O₂ from e.g. air present in the reaction environment. The risk of spontaneous explosion is therefore considerable.

RU-2252270 discloses a flow sheet for treating mattes essentially composed of copper-nickel sulfides, and some cobalt and PGM. The process uses a first atmospheric leach followed by a two-step autoclave leach. The net result of the process is a copper sulfide residue, also containing the PGM, and a nickel sulfate solution. This solution also contains any cobalt present in the feed. The disclosure does not concern the treatment of metallic alloys. Moreover, neither the alloy leaching step using copper sulfate with cementation of metallic Cu, nor the oxidizing copper leaching step, are divulged.

CA-2235429 describes a process in which copper sulfate is used for the dissolution of a.o. cobalt from iron-bearing mattes and alloys. During this step, copper cement is produced. This cement is calcined to form a copper oxide, which is subsequently used for the neutralization of the acidic leaching solution for the precipitation of iron as goethite (FeOOH). This flow sheet is only applicable when no PGM are present; such precious metals would indeed invariably accompany the copper cement and end up in the goethite instead of in the copper bearing phase, which is not desirable.

US-6440194 describes a process for the dissolution of cobalt, nickel and iron from an alloy prepared by aluminothermy. This alloy also contains PGM and some sulfur. Cobalt, nickel and iron are dissolved using sulfuric acid, while copper and the PGM do not react, which is expected in the non-oxidizing conditions applied. The reaction products comprise H₂, H₂S and CuS, further demonstrating that the conditions are reducing. Neither the alloy leaching step using copper sulfate with cementation of metallic Cu, nor the oxidizing copper leaching step, are divulged.

US-3954448 describes a process for the recovery of cobalt from cobaltiferous materials. The process is mainly pyrometallurgic in nature, but the resulting alloy or matte is dissolved in the presence of copper sulfate. Copper cement precipitates, which is removed by means of filtration, together with the PGM. The selective leaching of copper from the obtained residue, and the recirculation of the copper sulfate to the leaching step, are not taught.

US-4468302 again concerns copper-nickel mattes, not alloys. The residue of a first acid leach is roasted to remove the sulfidic sulfur. The obtained copper and nickel oxides are then split in a first part that is smelted to form anodes, and in a second part that is leached using air to form an electrolyte. The anodes are then refined using said electrolyte. PGM are recovered from the anode slimes.

WO-2000/073520 describes a 2-stage leaching process for the recovery of cobalt from mattes and/or alloys. A mixture of copper sulfate and sulfuric acid is used for the dissolution of cobalt; selectivity towards copper and iron is established by choosing adequate pH levels. Although the examples feature good yields for cobalt, the process is not suitable for PGM-containing alloys, because PGM would report to the iron residue from the second leaching step, which is not desirable.

The aim of the invention is to offer a high yield and safe process for the separation and recovery of metals, in particular of cobalt and of the PGM.

To this end, a process is divulged for the recovery of PGM from a cobalt-based, PGM-bearing alloy, comprising the steps of:
- powdering the alloy to a mean particle size of less than 250 µm;
- providing a mixed tank reactor equipped with means for feeding H₂SO₄ and a CuSO₄ solution;
- leaching in a mixed tank reactor the powdered alloy in a first acidic aqueous solution comprising H₂SO₄ and CuSO₄, thereby obtaining a CoSO₄ solution and a PGM-bearing metallic Cu residue;
- isolating the PGM-bearing metallic Cu residue from the first CoSO₄ solution, by solid/liquid separation;
- leaching in a mixed tank reactor the PGM-bearing metallic Cu residue in a second acidic aqueous solution comprising H₂SO₄ and an oxidizing agent, thereby obtaining a CuSO₄ solution and a PGM concentrate;
- isolating the PGM concentrate from the CuSO₄ solution, by solid/liquid separation;
- returning the CuSO₄ solution to the step of leaching the powdered alloy.

It is preferred to use powders with a D₅₀ of less than 100 µm. The powder can be obtained e.g. by atomization of the alloy.

In the step of leaching the powdered alloy, it is useful to maintain the pH of the first acidic aqueous solution below 4, preferably between 1 and 2, by providing an adequate quantity H₂SO₄.

It is also useful to maintain the oxygen reduction potential of the first acidic aqueous solution above 0 mV *vs.* Ag/AgCl by addition of Cu²⁺ in the step of leaching the powdered alloy. Typically, a stoichiometric amount of Cu²⁺ (*vs.* Co) is needed. The step is thus best performed without addition of any other oxidizing agent such as air, that is, using Cu²⁺ as the only such agent

During this first leaching step, the temperature of between 60 and 90 °C is particularly suitable.

In the step of leaching the PGM-bearing metallic Cu residue, it is useful to maintain the pH of the second acidic aqueous solution below 4, preferably between 1 and 2, by addition of an adequate quantity of H₂SO₄. Typically, a stoichiometric amount of acid (*vs.* Cu) is needed.

During this second leaching step, the temperature of between 60 and 90 °C is particularly suitable.

The proposed process relies on the oxidative characteristics of aqueous copper solutions, whereby Cu²⁺ ions oxidize not only any less noble metal such as Co, but also any free hydrogen, according to the respective reaction (1) and (2):

Cu²⁺ + Co^{o} → Co²⁺ + Cu^{o} (1)

Cu²⁺ + H₂ → Cu^{o} + 2H⁺ (2)

The above-mentioned equations show that no hydrogen will be formed, as long as Cu²⁺ ions are in solution. It thus appears that the competing reaction (3) of acid with cobalt is strongly inhibited, at least if the acidity remains moderate:

2H⁺ + Co^{o} → Co²⁺ + H₂ (3)

The net result is a total absence of free H₂, and thus a highly safe process.

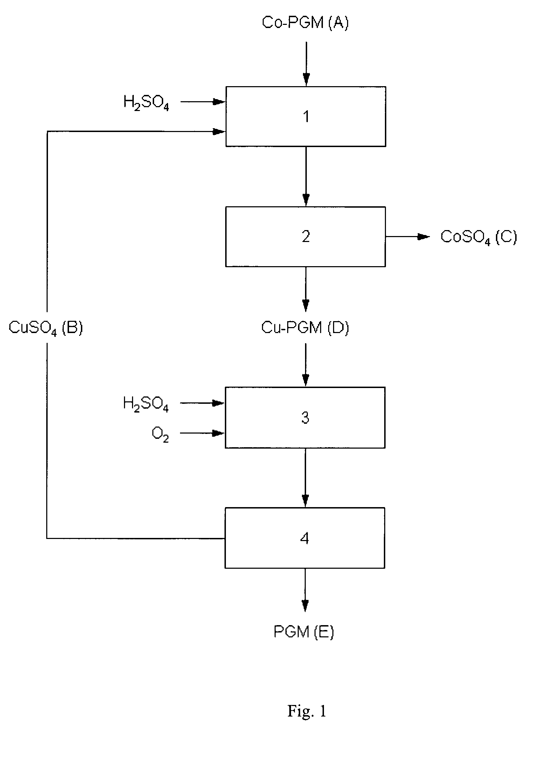

A schematic representation of the process for the treatment of alloys of cobalt and PGM is given in Figure 1. The reference numerals and letters correspond to the following process steps and streams:
(1) First leaching; (2) First solid/liquid separation; (3) Second leaching; (4) Second solid/liquid separation;
   (A) Powdered Co-PGM alloy; (B) CuSO₄ solution; (C) CoSO₄ solution; (D) PGM-bearing Cu residue; (E) PGM concentrate.

In the first leaching step (1), the Co-PGM alloy (A) should be finely powdered in order to ascertain sufficient dissolution kinetics. In acidic conditions, the CuSO₄ will selectively dissolve the cobalt and other less noble metals according to equation (1), leaving the PGM, together with metallic copper, in the residue (D).

During leaching, at least some CuSO₄ should remain present. Even a minimal amount (such a 1 mg/L) of Cu²⁺ indeed ensures that no H₂ will be formed. While the Cu²⁺ could be measured directly, it is more practical to monitor the ORP (oxidation-reduction potential) as an indicator of the presence of Cu²⁺. If the ORP decreases to below 0 mV *vs.* Ag/AgCl, no more Cu²⁺ is present in solution and the risk of H₂ formation arises.

It is useful to monitor the pH as some acid can be consumed in the leaching step, e.g. if oxidized metal compounds are present in the alloy. While a low pH increases the reaction kinetics, it also tends to increase the risk of H₂ formation if the Cu²⁺ would at any time during leaching become exhausted. A high reaction temperature also favors rapid reactions; there is however a tradeoff, as evaporation becomes excessive when approaching the boiling point of the solution.

After this first leaching step, the residue and the filtrate are separated by decantation or filtration (2). The products are a solution (C) containing most of the cobalt together with some residual CuSO₄, and a residue (D) containing the PGM along with metallic copper and possibly traces of undissolved alloy (A).

This residue (D) from this first leaching (1) and separation (2) steps can be further treated according to known ways, such as by copper electrowinning, whereby the PGM are further concentrated in so-called anode slimes. However, according to said preferred embodiment, a second leaching step is first performed on this residue.

This optional second leaching step (3) involves the selective dissolution of copper using an acid, preferably H₂SO₄, and an oxidizing agent. For the latter, air and ozone are suitable, but pure O₂ and H₂O₂ are usually the most interesting candidates from an economical point of view. If maximal dissolution of the copper is desired, stoichiometric amounts of acid and of oxidizing agents are to be used. Again, no H₂ is formed in this step.

The next step (4) separates the solid PGM concentrate (E) from the leach solution (B) that now mainly consists of aqueous CuSO₄. A small amount of dissolved CoSO₄ will also be present in this CuSO₄ solution: some of it originates from the solution that impregnates the residue (D); the remainder comes from the dissolution of any undissolved alloy in that residue.

The filtrate of the separation step (4) is returned to the first leaching step (1), where it is used for leaching of a new quantity of Co-PGM alloy. Any cobalt that is present in this recycled solution (B) will finally report to the filtrate (C). This preferred embodiment thus loosens the constraints on the first solid/liquid separation in step (2), allowing to envisage a simple decantation in that step.

Here again, the pH and the temperature during leaching are chosen so as to favor fast reaction kinetics. A too high acidity is however to be avoided, in particular towards the end of the leaching step, as the resulting CuSO₄ solution (B) has to be compatible with the first leaching step (1), to which it is recycled.

After the separation step, the PGM concentrate can further be refined according to known techniques.

Because copper cementation is easily performed in a sulfate solution, this medium is definitely favored in the proposed process. Somewhat faster kinetics may however be obtained when a small amount or HCl is added to the first leaching operation, although a negative effect on the cementation of copper is to be expected. This means that some residual Cu²⁺ will be present in the CoSO₄ solution (C). Downstream removal of this Cu²⁺ may be performed using a suitable reducing agent or a small amount of fresh alloy.

The amount of alloy that can be treated depends on the amount of CuSO₄ made available. To limit the volume of the circulated solutions, it seems appropriate to keep the concentration of CuSO₄ in the recycled stream (B) as high as possible. In practice, a certain maximum concentration should not be exceeded, so as to avoid the precipitation of CuSO₄ crystals when the solutions cool down, such as during storage.

It is further noteworthy that the complete process, including the regeneration of the CuSO₄, can be performed using just one reactor, a filter and a storage tank.

### Example

About 41.2 g of atomized (100 µm D₅₀) Co-Pt alloy is added to 500 mL of acidified CuSO₄ solution (63.5 g/L Cu, 10 g/L H₂SO₄). The alloy contains, by weight, 83% Co, 3.4% Cu and 0.2001% Pt. An overhead mixer is used for suspending and mixing the alloy particles. The solution is heated to 90 °C and the pH kept between 1.5 and 1.7 using diluted sulfuric acid (250 g/L H₂SO₄). The ORP (*vs.* Ag/AgCl) is also continuously monitored. The color of the alloy slowly changes from grey to red, which indicates the formation of metallic copper. After 4 h, the leaching comes to an end, as indicated by the ORP of the solution stabilizing at about 90 mV. The obtained mixture is filtered. The filtrate (515 mL) contains 50 g/L Co, 8 g/L Cu and <1 mg/L Pt. The residue (38.5 g) contains 20% Co, 75% Cu and 0.2% Pt. The cobalt yield is calculated to be 77%, while no Pt had dissolved.

Then, the residue is repulped in fresh water (400 mL) and heated to 90 °C. Fresh H₂SO₄ (1000 g/L) is used to control the pH between 1.5 and 1.8. Oxygen is sparged into the solution at a rate of 15 L/h. After 3.5 h, no more H₂SO₄ is consumed, indicating that the reaction has come to an end. Solids and liquid are separated by filtration. The residue (2.7 grams) contains 10% Co, 8% Cu and 3.2% Pt, while the filtrate (450 mL) contains 65 g/L Cu, 17 g/L Co and < 1 mg/L Pt.

The analytical results in Table 1 show that less than 1% of the cobalt and more than 99.4% of the Pt report to the second leach residue. Excellent separations and yields are thus achieved for these metals. The PGM concentrate (E) also contains silicates or any other inert fractions that were present in the starting Co-PGM alloy (A).

**Table 1: Analysis of feed and products according to Example**

| Stream | Quantity | Co | PGM (Pt) | Cu |
|---|---|---|---|---|
| **Step (1)** | | | | |
| (A) Co-PGM alloy | 41.2 g | 83% | 0.2001% | 3.4 |
| H₂SO₄ (250 g/L H₂SO₄) | 25 mL | - | - | - |
| (C) CoSO₄ solution | 515 mL | 50 g/L | <0.001 g/L | 8 g/L |
| (B) CuSO₄ solution (consumed) | 500 mL | - | - | 63.5 g/L |
| (D) PGM-bearing metallic Cu residue to step (2) | 38.5 g | 20% | 0.2% | 75% |

| **Step (2)** | | | | |
|---|---|---|---|---|
| (D) PGM-bearing Cu metallic residue from step (1) | 38.5 g | 20% | 0.2% | 75% |
| H₂SO₄ (1000 g/L H₂SO₄) | 62 mL | - | - | - |
| O₂ | 15 L/h | - | - | - |
| (B) CuSO₄ (produced) | 450 mL | 17 g/L | <0.001 g/L | 65 g/L |
| (E) PGM concentrate | 2.7 g | 10% | 3.2% | 8% |

## Claims

1. Process for the recovery of PGM from a cobalt-based, PGM-bearing alloy, comprising the steps of:
- powdering the alloy to a mean particle size of less than 250 µm;
- providing a mixed tank reactor equipped with means for feeding H₂SO₄ and a CuSO₄ solution;
- leaching in a mixed tank reactor the powdered alloy in a first acidic aqueous solution comprising H₂SO₄ and CuSO₄, thereby obtaining a CoSO₄ solution and a PGM-bearing metallic Cu residue;
- isolating the PGM-bearing metallic Cu residue from the first CoSO₄ solution, by solid/liquid separation;
- leaching in a mixed tank reactor the PGM-bearing metallic Cu residue in a second acidic aqueous solution comprising H₂SO₄ and an oxidizing agent, thereby obtaining a CuSO₄ solution and a PGM concentrate;
- isolating the PGM concentrate from the CuSO₄ solution, by solid/liquid separation;
- returning the CuSO₄ solution to the step of leaching the powdered alloy.

2. Process according to claim 1, **characterized in that** the powdered alloy has a D₅₀ of less than 100 µm.

3. Process according to claims 1 or 2, **characterized in that** the pH of the first acidic aqueous solution is maintained below 4, preferably between 1 and 2, by addition of H₂SO₄ in the step of leaching the powdered alloy.

4. Process according to any one of claims 1 to 3, **characterized in that** the oxygen reduction potential of the first acidic aqueous solution is maintained above 0 mV *vs.* Ag/AgCl by addition of Cu²⁺ in the step of leaching the powdered alloy.

5. Process according to any one of claims 1 to 4, **characterized in that** the temperature of the reactor content in the step of leaching the powdered alloy is between 60 and 90 °C.

6. Process according to any one of claims 1 to 5, **characterized in that** the pH of the second acidic aqueous solution is maintained below 4, preferably between 1 and 2, by addition of H₂SO₄ in the step of leaching the PGM-bearing metallic Cu residue.

7. Process according to any one of claims 1 to 6, **characterized in that** an oxidizing agent is added in the step of leaching the PGM-bearing metallic Cu residue.

8. Process according to any one of claims 1 to 7, **characterized in that** the temperature of the reactor content in the step of leaching the PGM-bearing metallic Cu residue is between 60 and 90 °C.

## Patentansprüche

1. Verfahren zur Rückgewinnung von PGM aus einer auf Cobalt basierenden, PGM-haltigen Legierung, bei dem man:
- die Legierung auf eine mittlere Teilchengröße von weniger als 250 µm pulverisiert;
- einen Mischtankreaktor mit Mitteln zur Zufuhr von H₂SO₄ und CuSO₄-Lösung bereitstellt;
- in einem Mischtankreaktor die pulverisierte Legierung in einer ersten sauren wässrigen Lösung, die H₂SO₄ und CuSO₄ umfasst, auslaugt, wodurch man eine CoSO₄-Lösung und einen PGM-haltigen metallischen Cu-Rückstand erhält;
- den PGM-haltigen metallischen Cu-Rückstand durch Fest/Flüssig-Trennung von der ersten CoSO₄-Lösung isoliert;
- in einem Mischtankreaktor den PGM-haltigen metallischen Cu-Rückstand in einer zweiten sauren wässrigen Lösung, die H₂SO₄ und ein Oxidationsmittel umfasst, auslaugt, wodurch man eine CuSO₄-Lösung und ein PGM-Konzentrat erhält;
- das PGM-Konzentrat durch Fest/Flüssig-Trennung von der CuSO₄-Lösung isoliert;
- die CuSO₄-Lösung zum Schritt des Auslaugens der pulverisierten Legierung zurückführt.

2. Verfahren nach Anspruch 1, **dadurch gekennzeichnet, dass** die pulverisierte Legierung einen D₅₀-Wert von weniger als 100 µm aufweist.

3. Verfahren nach Anspruch 1 oder 2, **dadurch gekennzeichnet, dass** man bei dem Schritt des Auslaugens der pulverisierten Legierung den pH-Wert der ersten sauren wässrigen Lösung durch Zugabe von H₂SO₄ unter 4 und vorzugsweise zwischen 1 und 2 hält.

4. Verfahren nach einem der Ansprüche 1 bis 3, **dadurch gekennzeichnet, dass** man bei dem Schritt des Auslaugens der pulverisierten Legierung das Sauerstoffreduktionspotential der ersten sauren wässrigen Lösung durch Zugabe von Cu²⁺ über 0 mV gegen Ag/AgCl hält.

5. Verfahren nach einem der Ansprüche 1 bis 4, **dadurch gekennzeichnet, dass** die Temperatur des Reaktorinhalts bei dem Schritt des Auslaugens der pulverisierten Legierung zwischen 60 und 90°C liegt.

6. Verfahren nach einem der Ansprüche 1 bis 5, **dadurch gekennzeichnet, dass** man bei dem Schritt des Auslaugens des PGM-haltigen metallischen Cu-Rückstands den pH-Wert der zweiten sauren wässrigen Lösung durch Zugabe von H₂SO₄ unter 4 und vorzugsweise zwischen 1 und 2 hält.

7. Verfahren nach einem der Ansprüche 1 bis 6, **dadurch gekennzeichnet, dass** man bei dem Schritt des Auslaugens des PGM-haltigen metallischen Cu-Rückstands ein Oxidationsmittel zugibt.

8. Verfahren nach einem der Ansprüche 1 bis 7, **dadurch gekennzeichnet, dass** die Temperatur des Reaktorinhalts bei dem Schritt des Auslaugens des PGM-haltigen metallischen Cu-Rückstands zwischen 60 und 90°C liegt.

## Revendications

1. Procédé de récupération de métaux du groupe du platine (MGP) à partir d'un alliage à base de cobalt contenant des MGP, comprenant les étapes consistant à :
- pulvériser l'alliage jusqu'à une taille moyenne de particules inférieure à 250 µm ;
- se procurer un réacteur à cuve agitée équipé de moyens d'alimentation en H₂SO₄ et en solution de CuSO₄ ;
- lixivier dans un réacteur à cuve agitée l'alliage pulvérisé dans une première solution aqueuse acide comprenant du H₂SO₄ et du CuSO₄, pour obtenir ainsi une solution de CoSO₄ et un résidu de Cu métallique contenant des MGP ;
- isoler le résidu de Cu métallique contenant des MGP de la première solution de CoSO₄, par séparation solide/liquide ;
- lixivier dans un réacteur à cuve agitée le résidu de Cu métallique contenant des MGP dans une deuxième solution aqueuse acide comprenant du H₂SO₄ et un oxydant, pour obtenir ainsi une solution de CuSO₄ et un concentré de MGP ;
- isoler le concentré de MGP de la solution de CuSO₄, par séparation solide/liquide ;
- renvoyer la solution de CuSO₄ à l'étape de lixiviation de l'alliage pulvérisé.

2. Procédé selon la revendication 1, **caractérisé en ce que** l'alliage pulvérisé a un D₅₀ de moins de 100 µm.

3. Procédé selon la revendication 1 ou 2, **caractérisé en ce que** le pH de la première solution aqueuse acide est maintenu en dessous de 4, de préférence entre 1 et 2, par addition de H₂SO₄ à l'étape de lixiviation de l'alliage pulvérisé.

4. Procédé selon l'une quelconque des revendications 1 à 3, **caractérisé en ce que** le potentiel de réduction de l'oxygène de la première solution aqueuse acide est maintenu au-dessus de 0 mV par rapport à Ag/AgCl par addition de Cu²⁺ à l'étape de lixiviation de l'alliage pulvérisé.

5. Procédé selon l'une quelconque des revendications 1 à 4, **caractérisé en ce que** la température du contenu du réacteur à l'étape de lixiviation de l'alliage pulvérisé se situe entre 60 et 90 °C.

6. Procédé selon l'une quelconque des revendications 1 à 5, **caractérisé en ce que** le pH de la deuxième solution aqueuse acide est maintenu en dessous de 4, de préférence entre 1 et 2, par addition de H₂SO₄ à l'étape de lixiviation du résidu de Cu métallique contenant des MGP.

7. Procédé selon l'une quelconque des revendications 1 à 6, **caractérisé en ce qu'**un oxydant est ajouté à l'étape de lixiviation du résidu de Cu métallique contenant des MGP.

8. Procédé selon l'une quelconque des revendications 1 à 7, **caractérisé en ce que** la température du contenu du réacteur à l'étape de lixiviation du résidu de Cu métallique contenant des MGP se situe entre 60 et 90 °C.
